(19) European Patent Office

(11) **EP 3 890 514 B1**

(12) **EUROPEAN PATENT SPECIFICATION**

(45) Date of publication and mention
of the grant of the patent:
**10.08.2022  Bulletin 2022/32**

(51) International Patent Classification (IPC):
**A23L 11/00** (2021.01)    **A23L 27/60** (2016.01)
**A23L 33/185** (2016.01)

(21) Application number: **19801360.9**

(52) Cooperative Patent Classification (CPC):
**A23L 11/00; A23L 27/60; A23L 33/185**

(22) Date of filing: **14.11.2019**

(86) International application number:
**PCT/EP2019/081292**

(87) International publication number:
**WO 2020/114746 (11.06.2020 Gazette 2020/24)**

(54) **DRESSING**

SOSSE

ASSAISSONEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **06.12.2018  EP 18210757**

(43) Date of publication of application:
**13.10.2021  Bulletin 2021/41**

(73) Proprietor: **Unilever IP Holdings B.V.
3013 AL Rotterdam (NL)**

(72) Inventors:
• **BOUWENS, Elisabeth, Cornelia, Maria
6708 WH Wageningen (NL)**
• **SCHWENZFEIER, Anja
14059 Berlin (DE)**

(74) Representative: **Fijnvandraat, Arnoldus
Unilever N.V.
Unilever Patent Group
Bronland 14
6708 WH Wageningen (NL)**

(56) References cited:
**EP-A1- 0 788 747      EP-A1- 1 405 572
EP-B1- 0 788 747      WO-A1-2012/089448
WO-A1-2013/067453      WO-A1-2014/095180
WO-A1-2018/122607      GB-A- 2 404 326
US-A- 4 304 795      US-A1- 2013 059 928**

• **TAMM F ET AL: "Functional properties of pea
protein hydrolysates in emulsions and
spray-dried microcapsules", FOOD
HYDROCOLLOIDS, ELSEVIER BV, NL, vol. 58, 3
March 2016 (2016-03-03), pages 204-214,
XP029485600, ISSN: 0268-005X, DOI:
10.1016/J.FOODHYD.2016.02.032**

## Description

The present invention relates to a food composition in the form of an oil-in-water emulsion comprising plant protein. It further relates to a process for preparing such food composition.

## Background

Emulsified food compositions such as mayonnaise or some salad dressings comprise water and oil. To stabilize such an emulsified food composition, an emulsifier is present. For mayonnaise, the emulsifier traditionally comprises egg, in particular, egg yolk. Egg yolk provides a specific taste to the emulsified food product. Egg yolk is known to provide an emulsion that is stable upon storage and provides an attractive gloss to the mayonnaise or salad dressings.

Some groups of consumers prefer to avoid eating ingredients of animal origin, including products derived from egg. Consequently, there is a need to provide an emulsified food product, in particular a mayonnaise or salad dressing, that does not rely on the use of egg-derived emulsifier, while preferably showing sufficient stability upon storage, and also the gloss that is known from equivalent products wherein egg-derived emulsifier is used.

Emulsifiers which are derived from plants are known. Although stable emulsification was established by these emulsifiers, it was observed that when used in high oil emulsions (like in normal mayonnaise), the gloss, which is an important quality defining characteristic for normal mayonnaise, was not present or much less than when egg was used.

WO 2018/122607A1 relates to a chickpea protein product and method of making thereof. WO2012/089448 relates to stabilised oil-in-water emulsion comprising ground pulse seed.

WO2014/095180A1 relates to a method of preparing an edible oil-in-water emulsion and emulsion so obtained.

WO2013/067453A1 relates to plant-based egg substitute and method of manufacture. EP0788747A1 relates to a mayonnaise-like product and a process for its manufacture.

Accordingly, a need was recognized for a stable high-oil (e.g. more than 65 wt%) oil-in-water emulsion composition without egg-derived ingredients, with the glossy appearance that resembles as much as possible that of equivalent emulsions using egg. Preferably, the emulsifier levels are low, in view of for example potential taste impact and production costs.

## Summary of the invention

Surprisingly, this problem could be solved by a food composition as defined in claim 1, in the form of an oil-in-water emulsion comprising:

- 65 to 85 wt% of vegetable oil,
- Water,
- Hydrolysed protein selected from the group consisting of pea protein, lentil protein, chick pea protein, lupine protein and mixtures thereof,

wherein the composition is free from egg-derived ingredients.

In a second aspect, the invention relates to a process to prepare the composition of the invention, the process comprising the step of:

a) Preparing a water phase comprising water,
b) Preparing an oil phase, comprising vegetable oil and hydrolysed protein selected from the group consisting of pea protein, lentil protein, chick pea protein, lupine protein and mixtures thereof,
c) Mixing the water phase and the oil phase to obtain a food composition in the form of an emulsion.

The invention is defined by the appended set of claims.

## Detailed description of the invention.

All percentages, unless otherwise stated, refer to the percentage by weight (wt%). "Weight ratio" means that the concentration of a first (class of) compound(s) is divided by the concentration of a second (class of) compound(s), and multiplied by 100 in order to arrive at a percentage.

"Spoonable" means that a composition is semi-solid but not free-flowing on a time scale typical for eating a meal, meaning not free-flowing within a time period of an hour. A sample of such substance is able to be dipped with a spoon from a container containing the composition.

Except in the operating and comparative examples, or where otherwise explicitly indicated, all numbers in this description indicating amounts or ratios of material or conditions of reaction, physical properties of materials and/or use are to be understood as modified by the word "about".

Features described in the context of one aspect of the invention can be applied in another aspect of the invention.

The invention provides a food product as defined in the first aspect above.

Emulsion

The composition of the invention is in the form of an oil-in-water emulsion. Examples of oil-in-water emulsions encompassed by the present invention include emulsified sauces, such as mayonnaise, and dressings, such as salad dressings and vinaigrettes. Preferably, the food composition is an emulsified sauce or dressing, preferably a mayonnaise, a salad dressing or a vinaigrette, and most preferably is a mayonnaise. Generally, a mayonnaise is spoonable, while a salad dressing or a vinaigrette is pourable. A vinaigrette traditionally is a mixture of vegetable oil and a vinegar, and may be a stable oil-in-water emulsion.

In the context of the present invention, the preferred oil-in-water emulsion may be stable as an emulsion during a time period of for example less than one hour (like for example some vinaigrettes). It is preferred that (after emulsifying) the emulsion is stable for more than one hour, preferably during a time period of half a year or more (like for example some mayonnaises).

Mayonnaise is generally known as a thick, creamy sauce that can be used as a condiment with other foods. Mayonnaise is a stable water-continuous emulsion of typically vegetable oil, egg yolk and either vinegar or lemon juice. In many countries the term mayonnaise may only be used in case the emulsion conforms to the "standard of identity", which defines the composition of a mayonnaise. For example, the standard of identity may define a minimum oil level, and a minimum egg yolk amount. Also, mayonnaise-like products having oil levels lower than defined in a standard of identity or not containing egg yolk can be considered to be mayonnaises in the context of the present invention. This kind of products may contain thickeners like starch to stabilise the aqueous phase. Mayonnaises may vary in colour, and are generally white, cream-coloured, or pale yellow. The texture may range from light creamy to thick. Generally, mayonnaise is spoonable. In the context of the present invention "mayonnaise" includes such mayonnaise and 'mayonnaise-like' emulsions with vegetable oil levels ranging from 5% to 85% by weight of the product. Mayonnaises in the context of the present invention do not necessarily need to conform to a standard of identity in any country.

Oil

It was observed, that at high oil levels, higher than 65 wt%, preferably higher than 70 wt%, the gloss of the emulsified food composition is absent when egg-derived emulsifier is absent. At stable oil-in-water emulsions with low oil levels this problem appears not to be present. Preferably the concentration of vegetable oil ranges from 65 to 85 wt%, preferably from 65% to 80%, even more preferably of from 70 to 75%, based on the weight of the composition. Any combination of ranges using these mentioned end points are considered to be part of the invention as well.

Preferred oils for use in the context of this invention are vegetable oils which are liquid at 5°C. Preferably the oil comprises sunflower oil, rapeseed oil, olive oil, soybean oil, and combinations of these oils. Therefore, preferably the vegetable oil is an edible oil.

Water

The composition of the invention comprises water. The total amount of water is preferably of from 15 to 35%, more preferably of from 20 to 35 wt%, even more preferably of from 25 to 30 wt%, based on the weight of the composition. Any combination of ranges using these mentioned end points are considered to be part of the invention as well.

Emulsifier

The composition of the invention comprises an oil-in-water emulsifier. The emulsifier serves to disperse oil droplets in the continuous aqueous phase of an oil-in-water emulsion. According to the invention, the composition comprises hydrolysed protein selected from the group consisting of pea protein, lentil protein, chick pea protein, lupine protein and mixtures thereof. Preferably, the hydrolysed protein is selected from the group consisting of pea, lentil, chick pea and mixtures thereof, even more preferably, the hydrolysed protein is selected from pea protein, lentil protein and mixtures thereof. Most preferably, the hydrolysed protein comprises pea protein. It may be preferred that the hydrolysed protein consists of protein selected from the group consisting of pea protein, lentil protein, chick pea protein, lupine protein and mixtures thereof, more preferably consists of protein selected from pea protein, lentil protein and mixtures thereof and even more preferably that the hydrolysed protein consists of pea protein.

The protein is preferably a protein rich in globulin. The level of globulin is preferably more than 80%, preferably more than 85 wt%, based on the weight of the protein.

It was surprisingly found, that at high oil levels (more than 70 wt%) using mild hydrolyzation of such an emulsifier, a significant improvement of glossiness of the oil-in-water emulsion could be achieved. The degree of hydrolysis is assessed via the method of Kim *et al.* (reference included in the example section) which uses the trichloroacetic acid (TCA) soluble nitrogen or TCA test. Both the amount of soluble nitrogen and the amount of total nitrogen was evaluated. The degree of hydrolysis (DH) was calculated using the amount of soluble proportion vs the total amount of nitrogen. The degree of hydrolysis, according to the TCA test, is from 2.2 to 5%, more preferably of from 2.2 to 4%, even more preferably of from 2.2% to 3.5%, even more preferably 2.5% to 3.5%, and most preferably of from 2.2% to 3%. At a degree of hydrolyzation of 4% or higher, the composition may become quite thin, and at even higher degrees of hydrolyzation, e.g. higher than 5%, it was found that the composition becomes too thin to form a commercially relevant composition.

The amount of hydrolysed protein selected from the group consisting of pea protein, lentil protein, chick pea protein and lupine protein and mixtures thereof is between 0.5 and 2.5 wt%, preferably of between 0.66 and 1 wt%, based on the weight of the composition (dry weight protein based on wet weight of composition including the protein). Higher levels resulted in a too thick product, whereas at lower levels the product is too thin or not glossy. Preferably, the amount of hydrolysed protein selected from the group consisting of pea protein, lentil protein and mixtures thereof is of between 0.5 and 2.5 wt%, more preferably of between 0.66 and 1 wt%, based on the weight of the composition. Even more preferably the amount of hydrolysed pea protein is of between 0.5 and 2.5 wt%, preferably of between 0.66 and 1 wt%, based on the weight of the composition. According to the invention, all pea protein, lentil protein, chick pea protein, lupine protein and mixtures thereof in the emulsion consists of hydrolysed protein.

With the use of said hydrolysed proteins egg-derived emulsifier could be omitted, while maintaining the characterizing gloss of compositions prepared with egg.

Acid and pH

The composition of the invention preferably has a pH ranging from 2 to 5, preferably ranging from 2.5 to 4.5.

The total amount of acid in the composition can be determined by titration with sodium hydroxide (NaOH), and expressed as titratable acidity. This is called the titratable acidity, expressed as acetic acid (HAc), which is determined using the following formula.

$$HAc\% = 100\% \cdot (V \cdot t \cdot M)/m \qquad (1)$$

wherein:

V:  volume NaOH solution added (mL)
t:  concentration NaOH solution (mol/L)
M:  molecular weight HAc (60.052 g/mol)
m:  mass (g) product which has been titrated

Preferably the acid comprises organic acid. More preferably, the acid is organic acid. Preferably, the organic acid comprises an acid selected from the group consisting of acetic acid, citric acid, malic acid, lactic acid, succinic acid, formic acid, propionic acid, ascorbic acid, salts thereof and mixtures thereof. Preferably the acid is selected from the group consisting of acetic acid, citric acid, malic acid, lactic acid, succinic acid, salts thereof and mixtures thereof. It is more preferred that the composition comprises acetic acid and salts thereof. Preferably the composition of the invention has a total titratable acidity ranging from 0.03% to 3% by weight expressed as acetic acid, preferably from 0.05% to 2% by weight, preferably from 0.1% to 1% by weight. Acetic acid is preferably present in an amount of more than 50 wt%, more preferably more than 80 wt%, even more preferably more than 90 wt%, even more preferably more than 95 wt% based on the weight of the total amount of acid in the composition.

Preferably, the composition comprises one or more organic acids other than acetic acid, such as preferably selected from the group consisting of citric acid, malic acid, lactic acid, succinic acid, propionic acid, ascorbic acid, salts and mixtures thereof, at a total concentration (all organic acids not being acetic acid taken together) ranging from 0.002% to 0.12% by weight of the composition. Such acids could preferably originate from or be added via vinegar.

Preferably the composition comprises one or more organic acids other than acetic acid at a concentration of such an acid ranging from 0.01% to 0.09% by weight of the composition, more preferred from 0.02% to 0.085% by weight, more preferred from 0.03% to 0.08% by weight, and most preferred from 0.04% to 0.08% by weight.

It can be preferred that the composition comprises acetic acid and one or more acids selected from the group consisting of citric acid, malic acid, lactic acid, succinic acid and mixtures thereof.

The acids as described in this specification include their corresponding salts which are in equilibrium with the acids (acetates, citrates, malates, lactates, succinates, etc.). In case a concentration of an acid is provided, then this concentration refers to total concentration of the acid and its corresponding salt.

Other ingredients

The composition of the invention preferably contains additionally other ingredients than already specifically mentioned in here. Preferably the composition contains plant material in the form of herbs and/or spices. In case such ingredients are present in the composition, then generally their total concentration is preferably at least 0.1% by weight, and preferably maximally 10% by weight, preferably maximally 5% by weight.

The composition of the invention may comprise sugar, but high levels are not desired. Sugar may be present to an amount of from 0.1 to 15 wt%, preferably of from 0.3 to 6 wt%, even more preferably of from 0.4 to 5 wt%, most preferably of from 0.5 to 4 wt%, based on the weight of the composition.

Total alkaline metal salt, for example sodium chloride, may be present to an extent of from 0.1 to 5 wt%, preferably from 0.15 to 4 wt%, or more preferably of from 0.2 to 3 wt%, based on the weight of the composition.

Oil- in-water emulsions often comprise thickeners. In the present invention it was found that thickeners are not needed to provide a desired viscosity which is recognised by the consumer as resembling that of a full fat mayonnaise. Accordingly, starch is preferably present in an amount of below 1%, more preferably below 0.6% even more preferably below 0.4%, most preferably no starch is present, based on the weight of the food composition. The food composition of the invention is preferably free from starch or gum or both.

With the use of the hydrolysed proteins a desired gloss could be reached. Preferably, the rheological properties defining the texture expressed in elastic modulus G' (in Pa) and Stevens Value (in grams). The G' is between 1000 and 4000 Pa, preferably between 1500 and 3000 Pa, as measured at 20°C. The Stevens Value (in grams) is preferably of between 50g and 400g, preferably between 100g and 300g, as measured at 20°C.

The droplet size D3.2 is preferably from 0.2 to 75, more preferably of between 5 and 50 $\mu$m, most preferably of between 10 and 30 microns. see M. Alderliesten, Particle & Particle Systems Characterization 8 (1991) 237-241; for definitions of average diameters).

The gloss of the composition can suitably be measured by a protocol as given below. The gloss is preferably of between 8 and 40, more preferably of between 10 and 30, as measured via the method as provided herein.

Method for preparation of composition

The compositions of the invention are prepared by any method commonly known for preparing oil-in-water emulsions. Preferably, by using such method, an oil-in-water emulsion is prepared, wherein the oil droplets have a surface weighted mean diameter D3,2 of less than 50 micrometer (see M. Alderliesten, Particle & Particle Systems Characterization 8 (1991) 237-241; for definitions of average diameters).

Accordingly, in a second aspect the present invention provides a method for making an emulsified food composition according to the first aspect of the invention. Preferred compounds and amounts indicated in the first aspect of the invention apply for this aspect as well. The method comprises the steps of:

a) Providing a water phase comprising water,
b) Providing an oil phase comprising vegetable oil and hydrolyzed protein selected from the group consisting of pea protein, lentil protein, chick pea protein, lupine protein and mixtures thereof,
c) Mixing the oil phase and the water phase to provide a food opposition in the form of a oil-in-water emulsion.

The method of the invention comprises homogenisation of a mixture of oil and water. This results in an oil-in-water emulsion. Technology to prepare oil-in-water emulsions is known in the art, e.g. for mayonnaise making. Preferably, water and water soluble ingredients are provided in step a). The acid can be pre-added to the water in step a).

It may be preferred, that the process further comprises the step of combining protein selected from the group consisting of pea protein, lentil protein, chick pea protein, lupine protein and mixtures thereof, preferably pea protein and /or lentil protein, and most preferably pea protein, with protease to provide hydrolyzed protein, which step is carried out before step a).

Hydrolysation of protein can conveniently carried out by an incubation procedure as known in the art. To this extend protease is used. Enzymes that can suitably be used are for example proteases selected from the group consisting of chymosin, neutral proteinase, subtilisin, papainase and mixtures thereof. Treatment is carried out using the amount of enzyme and time at a temperature effective enough until the desired degree of hydrolyzation is reached. Following the completion of the desired degree of protein hydrolysis the enzyme is rapidly inactivated by a heat treatment of 5 min at a temperature between 80-90°C. The amount of enzyme added will depend on the specific protease used and the desired incubation time and temperature and pH. Suitably, the amount of enzyme is used in an effective amount, as known or easily determined by the skilled person, which is preferably in the range of about 0.02 to 2% wt/wt enzyme based on the weight of the (pea) protein isolate wherein the incubation time is from about 3 to 60 minutes, preferably from 5 to 30 minutes. Suitable enzymes can be, but not limited to, Alcalase 2.4L, Neutrase 0.8L, Flavourzyme (from Novozymes), papain, pancreatin, chymotrypsin (from Sigma), Maxiren 600BF, MaxiPro CCP (from DSM), Promod 24L, Promod 671L (from Biocatalyst). Accordingly, preferably the process may further comprise the step of combining protein selected from the group consisting of pea protein, lentil protein, chick pea protein, lupine protein and mixtures thereof, preferably pea protein, with protease to provide hydrolyzed protein, which step is then carried out before step a). Such a hydrolyzation step showed optimal results in the context of the invention. In step b), an oil phase is prepared. The oil phase comprises vegetable oil and the hydrolysed protein. The amount of oil and the amount of hydrolysed protein are added in the amounts as indicated above in the content of the product description. It can be preferred, that non-hydrolysed protein is not added to the composition.

In step c), the oil phase comprising the hydrolysed protein, as provided in step b), and the water phase as provided in step c) are mixed to provide an oil-in-water-emulsion. Mixing is suitably carried out with a shear mixing device as known in the art such as a colloid mill, rotor-stator homogenizer, or Silverson mixing apparatus.

Use

The invention further relates to the use of use hydrolysed protein selected from the group consisting of pea protein, lentil protein, chick pea protein, lupine protein and mixtures thereof, with a degree of hydrolyzation of from 2.2 to below 5% according to the TCA test, to provide a glossy texture to oil-in-water emulsions with an oil content of from 65 to 85 wt% and which are free from egg-derived emulsifier, wherein the amount of used hydrolysed protein is of between 0.5 and 2.5 wt%, based on the weight of the composition.

The invention is now exemplified with the following, non-limiting examples:

**Example 1**

Yellow pea protein (YPP) hydrolysate

A 200 ml 10% w/w yellow pea protein (YPP, Roquette, containing 83% protein of which 90% globulin) dispersion was prepared in tap water (pH 7.3, no pH adjustment), stirred using a magnetic stirrer and heated to 37°C using a thermostatic bath. Then 0.005% v/w Alcalase was added and incubated for 5 min). This treatment resulted in an increase of degree of hydrolysis of 1% to reach an effective amount of hydrolysis. After the incubation time, the sample was placed in a water bath of 95°C until the sample reached a temperature of between 90-95°C, and maintained at this temperature for 5 minutes, then the sample was cooled to room temperature.

Dressing

The YPP hydrolysate as prepared above was used to make 1kg of a 70% w/w dressing with the ingredients given in Table 1. A water phase was prepared by combining the water phase components to water. Then the YPP hydrolysate was added to the water phase in amounts as given in Table 1. Then slowly 700g oil was added to the water phase containing YPP hydrolysate while mixing at low shear using a Silverson benchtop mixer at 2000 rpm for 2 min. When all oil was added a high shear treatment of 2 min at 7000 rpm was used using the Silverson and an emulsion screen. Then vinegar spirit and lemon juice were added for post acidification and this was mixed under low shear for 2 min using 2 min at 500 rpm.

For the comparative samples a 200 ml 10% w/w yellow pea protein (YPP, Roquette, containing 83% protein of which 90% globulin) dispersion was prepared in tap water (pH 7.3, no pH adjustment), stirred using a magnetic stirrer and placed in a water bath of 95°C until the sample reached a temperature of between 90-95°C, and maintained at this temperature for 5 minutes, then the sample was cooled to room temperature. The dressing of the comparative sample was made according to the above method using the ingredients as given in Table 1

The negative control sample was made using the similar pretreatment method as Example 1 except that 0.01% Alcalase added to 10% YPP for 12 min at 40 °C, resulting in a DH of more than 5%. The dressing of the negative sample was made in a similar way as the method used in Example 1.

Table 1 Ingredients for dressings using 1% or 0.7 % w/w YPP in the end-product.

| Formulation: | Example 1A 0.7% YPP 2.7%DH | Example 1B 1% YPP 2.7%DH | Comparative sample with 0.7% YPP 0% Δ DH | Comparative sample with 1% YPP 0% Δ DH | Comparative sample with 1% YPP with 10%DH |
|---|---|---|---|---|---|
| | 1000 g | 1000 g | 1000 g | 1000 g | 1000 g |
| Ingredients | grams | grams | grams | grams | grams |
| Waterphase components: | | | | | |
| TAP WATER | 158.75 | 128.75 | 158.75 | 128.75 | 128.75 |
| EDTA (EDTA-CaNa2.2H2O) | 0.07 | 0.07 | 0.07 | 0.07 | 0.07 |
| NaCl Non Iodized | 22 | 22 | 22 | 22 | 22 |
| Sugar Crystal white /20M | 27.3 | 27.3 | 27.3 | 27.3 | 27.3 |
| Acid Sorbic | 0.9 | 0.9 | 0.9 | 0.9 | 0.9 |
| YPP hydrolysate (10% w/w) of DH 2.7% | 70 | 100 | 0 | 0 | 0 |
| YPP hydrolysate (10% w/w) of DH 10% | | | | | 100 |
| YPP untreated (10% w/w) | 0 | 0 | 70 | 100 | 0 |
| Oil phase: F&O Soybean oil | 700 | 700 | 700 | 700 | 700 |
| Post adding ingredients: Vinegar spirit 12% | 19.5 | 19.5 | 19.5 | 19.5 | 19.5 |
| Lemon Juice Concentrate 45 Brix | 1.48 | 1.48 | 1.48 | 1.48 | 1.48 |

Results, conclusion

It was observed that the samples including 0.7% and 1% YPP hydrolysate showed a glossy product with higher glossiness values (expressed in glossiness units) than in a comparative sample wherein the YPP was not pretreated by a protease (see Table 2). If the enzyme treatment was 0.01% Alcalase added to 10% YPP for 12 min at 40°C, the degree of hydrolyses DH was higher than 5% (it was 10%DH) which was too high to prepare a stable dressing. A phase separation was observed between the oil and water phase.

Table 2 Glossiness values of dressing products of Example 1 and their comparative samples

| | Glossiness units (GU) | Stevens Values (g) | G' (Pa) |
|---|---|---|---|
| Comparative sample with 0.7 % YPP | 6.2 | 165 | 1800 |

(continued)

|  | Glossiness units (GU) | Stevens Values (g) | G' (Pa) |
|---|---|---|---|
| Comparative sample with 1% YPP | 7.5 | 200 | 2494 |
| Example 1A with 0.7% hydrolysed YPP (DH 2.7%) | 18.5 | 204 | 2003 |
| Example 1B with 1% hydrolysed YPP (DH 2.7%) | 17.4 | 225 | 2898 |

## Example 2: different enzymes

Similar method was used as in Example 1 but the pre-treatment of the 10% YPP differed in enzyme source and time of incubation according to the Table 3 below:

Table 3 Examples using different enzymes. The degree of hydrolyzation is between 1 and 3.5%, as confirmed using the TCA test.

| No. | protease | class proteases | product name | source | Pretreatment conditions (% enzyme, time, temperature) |
|---|---|---|---|---|---|
| 2.1 | Chymosin | Aspartic Protease | Maxiren 600 BF | DSM | 0.5% v/w 30 min, 37 °C |
| 2.2 | Neutral proteinase | Metalloprotein | Neutrase 0.8L | Novozymes | 0.005% v/w, 15 min, 37 °C |
| 2.3 | Subtilisin | Serine protease | Alcalase 2.4L | Novozymes | 0.01% 10 min, 20 °C |
| 2.4 | Papainase | Cysteine protease | Papain P-3375 | Papaya, Sigma | 2 mg papain extract, 5 min, 37 °C |

Table 4 Glossiness Units of dressing products made similar as in Example 1 and their comparative sample

| Samples: | Glossiness units (GU) | Stevens values (g) | G' (Pa) |
|---|---|---|---|
| Comparative sample with 1 % YPP | 7.5 | 200 | 2494 |
| Example 2.1 | 10.4 | 240 | 2319 |
| Example 2.2 | 13.4 | 240 | 2726 |
| Example 2.3 | 16.3 | 249 | 2440 |
| Example 2.4 | 12.2 | 226 | 2771 |

It can be concluded that the protease used for the preparation of the protein hydrolysate can be selected from the group consisting of chymosin, neutral proteinase, subtilisin or papainase. The samples including 1% YPP hydrolysate showed a glossy and smooth product with higher glossiness (expressed in glossiness units) than in a comparative sample wherein the YPP was not pretreated by a protease.

## Example 3: Lentil protein isolate

Similar method and was used as in Example 1 but the protein source and the protein content used differed as indicated in the Table 5 below. To isolate the globulin rich protein fraction the precipitated proteins at pH 3 were separated from the supernatant and taken up at pH 7.5 prior to the pretreatment followed by the preparation of the dressing.
Comparative samples were made in a similar way as the examples except that the protein isolate was not pretreated by a protease.

Table 5 Plant protein sources used in examples

| Example | Plant protein source | Product name, batch, supplier | % Dry Matter of protein source in dressing |
|---|---|---|---|
| | | | |
| 3.2 | Yellow Lentil protein, isolated at pH 3 | Vitessence 2554, Ingredion | 1.15 |

Table 6: Glossiness Units of dressing products made similar as in Example 1 and their comparative samples. The degree of hydrolyzation was confirmed to be between 1 and 3.5%.

| | Glossiness units (GU) | Stevens Values (g) | G' (Pa) |
|---|---|---|---|
| Comparative sample 3.2 | 5.3 | 211 | 2475 |
| Example 3.2 | 12.2 | 233 | 3132 |

**Methods used:**

Degree of protein hydrolysis (%DH)

%DH is determined by the ratio soluble N in 10% TCA /total nitrogen in protein as a measure of the degree of hydrolysis (DH) according to Kim et al J.Agr. Food Chem. 1990 Kim S.Y., Park P.S.W., Rhee K.C. Functional properties of proteolytic enzyme modified soy protein isolate. J. Agric. Food Chem. 1990; 38:651-656.

DH= Soluble N in 10% TCA/ total N in protein sample
Procedure: 10 ml (untreated and pretreated) protein samples (of 5 or 10% w/w) were mixed with 10 ml 20 w/w % TCA; then samples were centrifuged 30 min 12000 g, using 50 ml falcon tubes
supernatant and pellet were carefully separated and their protein content was analysed by total N analysis in the samples.

Rheology

Rheological properties (dynamic moduli and viscosity) were measured using an AR2000ex rheometer (TA Instruments Ltd, UK). The rheometer was equipped with parallel plates (4 cm diameter) with roughened surfaces and a measurement gap of 1 mm. Dynamic moduli (G', G") and tan $\delta$ (= G"/G') were determined from oscillatory measurements performed at 1 Hz frequency; Strain was set at 0. 1%, and temperature at 20°C. G' was recorded after 5 minutes. This means the measurement in the Rheometer is 5 minutes and that G' at t=5 min is the data given. (Samples are always stored 24h at 4°C after preparation)

Stevens values

Firmness (or Hardness or Stevens value: SV) was determined using a Stevens Texture Analyser equipped with a typical mayonnaise grid, speed 1mm/s, depth 20 mm, at room temperature. The mayonnaise grid comprises square openings of approximately 3x3 mm, consisting of wire with a thickness of approximately 1mm, diameter of the circular grid is 37.4mm.

Gloss measurement protocol:

The Konika Minolta Gloss 268 Plus glossmeter was used to determine the glossiness of the dressing samples by measuring specular reflection gloss from the emulsion surface. This gloss meter consisting of three measuring angles (20°, 60°, 85°), each in accordance with DIN, ISO, ASTM, and JIS Z norms. The type of surface to be measured determines the gloss meter angle to be used and for the dressing samples the Units are given in GU measured at angle of 60°. The size of the measurement spot is 9x15 mm. Measurement of dressing samples: The sample was put in special sample holder bottom, air bubbles were removed and the sample was made flat by using sharp knife specially used for the equipment. The sample was measured two times, then the sample was turned 180 degrees in the sample holder and measure again two times. Then similar sample was prepared fresh in the sample holder and measured again using the same procedure which in the end results in 8 GU values. To obtain the mean GU value 8 data points were used.

**Claims**

1. Food composition in the form of an oil-in-water emulsion, comprising:

   • 65 to 85 wt% of vegetable oil,
   • Water,
   • Hydrolyzed protein selected from the group consisting of pea protein, lentil protein, chick pea protein, lupine protein and mixtures thereof,

   wherein the composition is free from egg-derived ingredients,

   wherein the hydrolysed protein has a degree of hydrolyzation of 2.2 to 5%, according to the TCA test
   wherein the amount of hydrolysed protein is between 0.5 and 2.5 wt%, based on the weight of the composition,
   wherein all pea protein, lentil protein, chickpea protein, lupine protein and mixtures thereof in the emulsion consists of hydrolysed protein.

2. Food composition according to claim 1, wherein the hydrolysed protein has a degree of hydrolyzation from 2.2 to 4%, preferably more than 2.2 and less than 3.5%, according to the TCA test.

3. The food composition according to any one of the preceding claims, wherein the globulin level in the protein is more than 80 wt%, based on the weight of the protein.

4. Food composition according to any of the preceding claims, wherein the hydrolysed protein comprises pea protein, lentil protein or mixtures thereof, preferably wherein the hydrolysed protein comprises pea protein.

5. Food composition according to anyone of the preceding claims, wherein the amount of hydrolysed protein is between 0.66 and 1 wt%, based on the weight of the composition.

6. Food composition according to anyone of the preceding claims, wherein the amount of oil is from 65 to 80 wt%, preferably from 70 to 75 wt%, based on the weight of the composition.

7. Food composition according to anyone of the preceding claims, wherein the pH of the composition is between 2.4 and 4.5.

8. Food composition according to anyone of the preceding claims, wherein the G' (in Pa) is between 1000 and 4000 Pa, preferably between 1500 and 3000 Pa , as measured at 20 °C, determined from oscillatory measurements performed at 1 Hz frequency; strain set at 0.1%, and recorded after 5 minutes.

9. Food composition according to any one of the preceding claims, wherein the composition is free from starch or gum or from both.

10. Food composition according to any one of the preceding claims, wherein the droplet size D3.2 is between 0.2 to 75 $\mu$m.

11. Process to manufacture a composition according to any one of the preceding claims, the process comprising the steps of:

    a) Providing a water phase comprising water,
    b) Providing an oil phase comprising vegetable oil and hydrolyzed protein selected from the group consisting of pea protein, lentil protein, chick pea protein, lupine protein and mixtures thereof,
    c) Mixing the oil phase and the water phase to provide a food opposition in the form of an oil-in-water emulsion.

12. Process according to claim 11, wherein the process further comprises the step of

    • Combining protein selected from the group consisting of pea protein, lentil protein, chick pea protein, lupine protein and mixtures thereof, preferably pea protein, with protease to provide hydrolyzed protein,

carried out before step a).

13. Use of hydrolysed protein selected from the group consisting of pea protein, lentil protein, chick pea protein, lupine protein and mixtures thereof, with a degree of hydrolyzation from 2.2 to below 5% according to the TCA test, to provide a glossy texture to oil-in-water emulsions with a vegetable oil content of from 65 to 85 wt% and comprising water and which are free from egg-derived emulsifier,
wherein the amount of used hydrolysed protein is of between 0.5 and 2.5 wt%, based on the weight of the composition.


**Patentansprüche**

1. Lebensmittelzusammensetzung in Form einer Öl-in-Wasser-Emulsion, umfassend:

   • 65 bis 85 Gew.-% Pflanzenöl,
   • Wasser,
   • hydrolysiertes Protein, ausgewählt aus der Gruppe, bestehend aus Erbsenprotein, Linsenproteil, Kichererbsenprotein, Lupinenprotein und Mischungen davon,

   wobei die Zusammensetzung frei von aus Ei stammenden Zutaten ist,

   wobei das hydrolysierte Protein gemäß dem TCA-Test einen Hydrolysegrad von 2,2 bis 5% aufweist,
   wobei die Menge des hydrolysierten Proteins zwischen 0,5 und 2,5 Gew.-%, bezogen auf das Gewicht der Zusammensetzung, beträgt,
   wobei sämtliches Erbsenprotein, Linsenprotein, Kichererbsenprotein, Lupinenprotein und Mischungen davon in der Emulsion aus hydrolysiertem Protein besteht.

2. Lebensmittelzusammensetzung nach Anspruch 1, wobei das hydrolysierte Protein einen Hydrolysegrad von 2,2 bis 4%, vorzugsweise von mehr als 2,2 und weniger als 3,5% gemäß dem TCA-Test aufweist.

3. Lebensmittelzusammensetzung nach irgendeinem der vorhergehenden Ansprüche, wobei der Globulingehalt in dem Protein mehr als 80 Gew.-%, bezogen auf das Gewicht des Proteins, beträgt.

4. Lebensmittelzusammensetzung nach einem der vorhergehenden Ansprüche, wobei das hydrolysierte Protein Erbsenprotein, Linsenprotein oder Mischungen davon umfasst, wobei das hydrolysierte Protein vorzugsweise Erbsenprotein umfasst.

5. Lebensmittelzusammensetzung nach irgendeinem der vorhergehenden Ansprüche, wobei die Menge des hydrolysierten Proteins zwischen 0,66 und 1 Gew.-%, bezogen auf das Gewicht der Zusammensetzung, beträgt.

6. Lebensmittelzusammensetzung nach irgendeinem der vorhergehenden Ansprüche, wobei die Menge des Öls 65 bis 80 Gew.-%, vorzugsweise 70 bis 75 Gew.-%, bezogen auf das Gewicht der Zusammensetzung, beträgt.

7. Lebensmittelzusammensetzung nach irgendeinem der vorhergehenden Ansprüche, wobei der pH-Wert der Zusammensetzung zwischen 2,4 und 4,5 liegt.

8. Lebensmittelzusammensetzung nach irgendeinem der vorhergehenden Ansprüche, wobei der G' (in Pa) zwischen 1000 und 4000 Pa, vorzugsweise zwischen 1500 und 3000 Pa, liegt, gemessen bei 20°C, bestimmt aus Schwingungsmessungen, die bei einer Frequenz von 1 Hz durchgeführt wurden, die Dehnung auf 0,1% eingestellt und nach 5 Minuten aufgezeichnet.

9. Lebensmittelzusammensetzung nach irgendeinem der vorhergehenden Ansprüche, wobei die Zusammensetzung frei von Stärke oder Gummi oder von beidem ist.

10. Lebensmittelzusammensetzung nach irgendeinem der vorhergehenden Ansprüche, wobei die Tröpfchengröße D3.2 zwischen 0,2 und 75 μm liegt.

**11.** Verfahren zur Herstellung einer Zusammensetzung nach irgendeinem der vorhergehenden Ansprüche, wobei das Verfahren die Schritte umfasst:

a) Bereitstellen einer Wasser umfassenden Wasserphase,
b) Bereitstellen einer Ölphase, umfassend Pflanzenöl und hydrolysiertes Protein, ausgewählt aus der Gruppe, bestehend aus Erbsenprotein, Linsenprotein, Kichererbsenprotein, Lupinenprotein und Mischungen davon,
c) Mischen der Ölphase und der Wasserphase, um einen Lebensmittelgegensatz in Form einer Öl-in-Wasser-Emulsion bereitzustellen.

**12.** Verfahren nach Anspruch 11, wobei das Verfahren ferner den Schritt umfasst:

• Kombinieren von Protein, ausgewählt aus der Gruppe, bestehend aus Erbsenprotein, Linsenprotein, Kichererbsenprotein, Lupinenprotein und Mischungen davon, vorzugsweise Erbsenprotein, mit Protease, um ein hydrolysiertes Protein zu liefern,

ausgeführt vor Schritt a).

**13.** Verwendung von hydrolysiertem Protein, ausgewählt aus der Gruppe, bestehend aus Erbsenprotein, Linsenprotein, Kichererbsenprotein, Lupinenprotein und Mischungen davon, mit einem Hydrolysierungsgrad von 2,2 bis unter 5%, nach dem TCA-Test, um den Öl-in-Wasser-Emulsionen mit einem Pflanzenölgehalt von 65 bis 85 Gew.-% eine glänzende Struktur zu verleihen sowie umfassend Wasser und die frei von Ei stammendem Emulgator sind, wobei die Menge des verwendeten hydrolysierten Proteins zwischen 0,5 und 2,5 Gew.-%, bezogen auf das Gewicht der Zusammensetzung, liegt.

## Revendications

**1.** Composition alimentaire dans la forme d'une émulsion huile-dans-eau, comprenant :

• de 65 à 85 % en masse d'huile végétale,
• de l'eau,
• une protéine hydrolysée choisie dans le groupe consistant en protéine de pois, protéine de lentille, protéine de pois chiche, protéine de lupine et mélanges de celles-ci,

dans laquelle la composition est exempte d'ingrédients dérivés d'œuf,

dans laquelle la protéine hydrolysée présente un degré d'hydrolyse de 2,2 à 5 %, selon le test TCA
dans laquelle la quantité de protéine hydrolysée est de 0,5 à 2,5 % en masse, sur la base de la masse de la composition,
dans laquelle la totalité de protéine de pois, protéine de lentille, protéine de pois chiche, protéine de lupine et mélanges de celles-ci dans l'émulsion consiste en protéine hydrolysée.

**2.** Composition alimentaire selon la revendication 1, dans laquelle la protéine hydrolysée présente un degré d'hydrolyse de 2,2 à 4 %, de préférence supérieur à 2,2 et inférieur à 3,5 % selon le test TCA.

**3.** Composition alimentaire selon l'une quelconque des revendications précédentes, dans laquelle la teneur en globuline dans la protéine est supérieure à 80 % en masse, sur la base de la masse de la protéine.

**4.** Composition alimentaire selon l'une quelconque des revendications précédentes, dans laquelle la protéine hydrolysée comprend une protéine de pois, protéine de lentille ou des mélanges de celles-ci, de préférence dans laquelle la protéine hydrolysée comprend une protéine de pois.

**5.** Composition alimentaire selon l'une quelconque des revendications précédentes, dans laquelle la quantité de protéine hydrolysée est de 0,66 à 1 % en masse, sur la base de la masse de la composition.

**6.** Composition alimentaire selon l'une quelconque des revendications précédentes, dans laquelle la quantité d'huile est de 65 à 80 % en masse, de préférence de 70 à 75 % en masse, sur la base de la masse de la composition.

**7.** Composition alimentaire selon l'une quelconque des revendications précédentes, dans laquelle le pH de la composition est de 2,4 à 4,5.

**8.** Composition alimentaire selon l'une quelconque des revendications précédentes, dans laquelle le G' (en Pa) est de 1 000 à 4 000 Pa, de préférence de 1 500 à 3 000 Pa, comme mesuré à 20°C, déterminé à partir de mesures oscillatoires réalisées à une fréquence de 1 Hz ; tamisage fixé à 0,1 %, et enregistré après 5 minutes.

**9.** Composition alimentaire selon l'une quelconque des revendications précédentes, dans laquelle la composition est exempte d'amidon ou de gomme ou des deux.

**10.** Composition alimentaire selon l'une quelconque des revendications précédentes, dans laquelle la taille de gouttelette D3.2 est de 0,2 à 75 $\mu$m.

**11.** Procédé pour la fabrication d'une composition selon l'une quelconque des revendications précédentes, le procédé comprenant les étapes consistant à :

a) fournir une phase d'eau comprenant de l'eau,
b) fournir une phase d'huile comprenant de l'huile végétale et une protéine hydrolysée choisie dans le groupe consistant en protéine de pois, protéine de lentille, protéine de pois chiche, protéine de lupine et mélanges de celles-ci,
c) mélanger la phase d'huile et la phase d'eau pour fournir une opposition alimentaire dans la forme d'une émulsion huile-dans-eau.

**12.** Procédé selon la revendication 11, dans lequel le procédé comprend de plus l'étape consistant à

• combiner une protéine choisie dans le groupe consistant en protéine de pois, protéine de lentille, protéine de pois chiche, protéine de lupine et mélanges de celles-ci, de préférence protéine de pois, avec une protéase pour fournir une protéine hydrolysée,

réalisée avant l'étape a).

**13.** Utilisation de protéine hydrolysée choisie dans le groupe consistant en protéine de pois, protéine de lentille, protéine de pois chiche, protéine de lupine et mélanges de celles-ci, avec un degré d'hydrolyse de 2,2 à moins de 5 % selon le test TCA, pour fournir une texture brillante à des émulsions huile-dans-eau avec une teneur en huile végétale de 65 à 85 % en masse et comprenant de l'eau et qui est exempte d'émulsifiant dérivé d'œuf, dans laquelle la quantité de protéine hydrolysée utilisée est de 0,5 à 2,5 % en masse, sur la base de la masse de la composition.

**EP 3 890 514 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2018122607 A1
- WO 2012089448 A
- WO 2014095180 A1
- WO 2013067453 A1
- EP 0788747 A1

### Non-patent literature cited in the description

- **M. ALDERLIESTEN.** *Particle & Particle Systems Characterization,* 1991, vol. 8, 237-241
- **KIM ; KIM S.Y. ; PARK P.S.W. ; RHEE K.C. et al.** *J.Agr. Food Chem.,* 1990
- Functional properties of proteolytic enzyme modified soy protein isolate. *J. Agric. Food Chem.,* 1990, vol. 38, 651-656